(19) **Europäisches Patentamt**
**European Patent Office**
**Office européen des brevets**

(11) **EP 2 753 113 B1**

(12) **EUROPEAN PATENT SPECIFICATION**

(45) Date of publication and mention
of the grant of the patent:
**14.06.2017 Bulletin 2017/24**

(51) Int Cl.:
***H04W 24/02*** (2009.01)

(21) Application number: **13290002.8**

(22) Date of filing: **07.01.2013**

(54) **METHOD AND APPARATUS FOR CELL OUTAGE HANDLING**

VERFAHREN UND VORRICHTUNG ZUR ZELLAUSFALLHANDHABUNG

PROCÉDÉ ET APPAREIL DE MANIPULATION D'UNE INDISPONIBILITÉ DE CELLULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.07.2014 Bulletin 2014/28**

(73) Proprietor: **ALCATEL LUCENT
92100 Boulogne-Billancourt (FR)**

(72) Inventors:
• **Kühn, Edgar
70563 Stuttgart (DE)**
• **Eckhardt, Harald
70195 Stuttgart (DE)**

(74) Representative: **Wetzel, Emmanuelle et al
Alcatel-Lucent
Intellectual Property Business Group
70430 Stuttgart (DE)**

(56) References cited:
• **M. AMIRIJOO ET ALL: "cell outage management
in LTE networks", ISWCS 2009 SIENA ITALY, 30
September 2009 (2009-09-30), - 30 September
2009 (2009-09-30), pages 1-5, XP002704058,
Vienna, Austria**
• **3GPP: "3rd Generation Partnership Project;
Technical Specification Group services and
system Aspects; Telecommunication
management; Self Organizing Networks (SON);
Self healing concepts and requirements
( Release 11)", 3GPP TS 32.541 V11.0.0, 1
September 2012 (2012-09-01), - 1 September 2012
(2012-09-01), pages 1-21, XP002704059,**

## Description

## Field of the invention

The invention relates to a method for cell outage compensation in cellular networks.

## Background and related art

An effective way of dealing with the outage of radio cells is important for providing radio service in a wireless network (cellular network) at a constantly high service level. Document "Cell Outage Management in LTE Networks", ISWCS 2009 Siena, Italy (30.09.2009), M amirijoo et all, discloses techniques to detect cell outages and to compensate said cell outages.

Especially for reuse-1 radio systems like LTE, it is possible to compensate for radio cell outages by adjusting the signal emission and reception settings of nearby radio transmitters such that the radio transmitters are capable to serve as a substitute for the radio transmitter or radio base station in outage.

Since outages occur unpredictably, except for scheduled maintenance, adjusting the nearby radio transmitters preferably takes effect immediately once a cell outage is detected. Thus optimization of transmitter settings by SON (Self Organizing Networks) mechanisms is not applicable since the iterative process of data acquisition and optimization of transmitter settings takes too long and the outage will be recognized by a user of the network.

A state of the art solution may be the pre-calculation of preset configurations for the transmitter settings using network planning tools. However the available planning data may deviate from reality and reflect erroneous radio propagation and reception conditions.

Thus there is a need for a method for determining preset configurations for radio transmitters, which are adapted to the actual radio propagation and reception conditions.

## Summary

The invention provides for a method for determining preset configurations for a set of first radio transmitters of a set of first radio cells, a computer program product, a wireless cellular network and a network management entity in the independent claims. Embodiments are given in the dependent claims.

Various embodiments provide a technique for dealing with an outage of a radio cell in a cellular network such that the outage will most likely not be noticed by a user of network services.

In particular some embodiments provide a method for determining preset configurations empowering radio transmitters to serve as a substitute for a radio transmitter that is malfunctioning or has been shut down.

The radio cells have dedicated radio transmitters, which provide the radio cells with radio signals. For the following discussion, the radio cell assumed to be in outage is called the second radio cell with a respective second radio transmitter. The radio cells adjacent to the second radio cell are called first radio cells with respective first radio transmitters. Note that in this context the term "adjacent" does not necessarily mean that radio cells are adjacent in a geographical sense, rather "adjacent" means that radio signals being provided by the first radio transmitters may also be detected within the second radio cell.

In a first method step of some embodiments signal data characterizing the coverage and capacity of the first radio cells by radio signals provided by the first and second radio transmitters is determined. In a second method step of some embodiments signal data for the second radio cell is determined as described before. Appropriate signal data may be the received signal strength, the signal to interference plus noise ratio (SINR) of a received radio signal and the throughput per hertz bandwidth measured by a receiver within the coverage area of a radio transmitter.

Additional data like neighbor information, number of neighbors, capabilities of the UE (user equipment) like transmit power or current availability and precision of position information, may also be used. Signal data may be determined by any suitable receiver located within a radio cell.

Using the determined signal data performance values characterizing the coverage and capacity of the first and second radio cells with radio signals provided by the first radio transmitter are determined. Determining the performance values may for example be done by applying a certain performance metric that uses the signal data described before. Knowing the signal emission and reception settings of the set of first radio transmitters, one may now determine in how far the performance values change once the signal emission and reception settings of the radio transmitters are varied. Thus it is possible for example by applying a numerical optimization method to determine a set of modified signal emission and reception settings for the set of first radio transmitters that yields enhanced performance values for the original coverage area of the second radio transmitter. Applying the modified signal emission and reception settings to the set of first radio transmitters may then enable the set of first radio transmitters to serve as a substitute for the second radio transmitter in regard to coverage and capacity of the original coverage area of the second radio transmitter.

The modification of signal emission and reception settings has to be conducted considering that a minimum quality of service for radio signals within the first radio cells has to be maintained. The desired minimum quality of service may for example be defined by a network administrator for the radio cell as a whole, for certain areas within the radio cell and/or for certain network load situations.

Determining the performance values as well as determining the modified signal emission and reception settings of the radio transmitters may be conducted by radio base stations, network management entities or any decentralized management device.

The determined modified signal emission and reception settings for the set of first radio transmitters may then be stored as preset configurations and may be applied once an outage of the second radio cell has been detected. It is also possible to forward the modified signal emission settings to the base station of the radio transmitter assumed to be in outage or to other base stations or network management entities.

The embodiment as described before may have the advantage that the preset configurations are being determined using signal data characterizing the actual coverage and capacity situation of the radio cells. Thus the preset configurations will be adapted very well to the actual network load situation when a radio cell outage is detected.

It is also possible to determine preset configurations not only for outage cases but also for the case of a controlled shutdown of a radio cell for energy saving purposes. This may be done by testing whether a determined preset configuration will yield a sufficient coverage and capacity for a radio cell to shut down, such that the Quality of Service provided within the radio cell to shut down is maintained.

Since the radio propagation and reception conditions may change over time the method as described above may be used repeatedly such that the preset configurations are being kept up to date.

In some embodiments determining the set of modified signal emission and reception settings for the set of first radio transmitters may comprise a number of steps that is repeated until appropriate signal emission and reception settings for the set of first radio transmitters is found.

In a first method step a varied set of signal emission and reception settings for the first radio transmitters is determined, using the original signal emission and reception settings of the first radio transmitters. Herein a variation range and direction for the various parameters may be predefined by a network administrator. For example the variation of the tilt and azimuth of the radio transmitter may be performed with a predefined direction and a predefined step size for the respective angles.

In a second method step performance values for the first radio cells and the original coverage area of the second radio transmitter are being determined using the varied set of signal emission and reception settings of the first radio transmitters. Herein it is assumed that the second radio transmitter is in outage due to a shutdown or a malfunction.

In a third method step the new performance values are compared with predefined minimum performance values for the radio cells or radio cells areas. The minimum performance values may be defined by a network administrator such that the requirements described above are achieved. One may also compare the performance values to the performance values that have been determined for the previous set of signal emission and reception settings. This may help to determine whether the direction of variation of the parameters leads to higher or lower performance values. If the performance values decrease upon variation of the settings, the direction of the variation should be changed.

If the performance values for the varied set of signal emission and reception settings are equal or higher than the predefined minimum for the performance values, the set of signal emission and reception settings may be stored and/or forwarded as preset configurations for the subset of first radio transmitters. If the performance values for the varied set of signal emission and reception settings are below the predefined minimum for the performance values the signal emission and reception settings have to be varied again until an appropriate set of signal emission and reception settings has been found.

In some embodiments a model for signal propagation with the second radio cell is determined. This is done using model data characterizing the location-dependent coverage and capacity for predefined transmit power and signal emission and reception setting of the second radio transmitter. In some situations it might not be possible to directly measure signal data of a first radio transmitter within the coverage area of the second radio transmitter. This may be the case if the received signal strength of radio signals provided by one or more of the first radio transmitters is much lower than the received signal strength of radio signals provided by the second radio transmitter. Yet in order to use the method described for determining preset configurations as described above one may estimate signal data using a radio propagation model instead of measuring signal data. Having such a model for radio propagation and knowing the signal emission and reception settings of the first radio transmitters an estimation of signal data is possible.

In some embodiments determining the model for signal propagation within the original coverage area of the second radio transmitter comprises determining model-data characterizing a received signal strength or signal strength distribution at a predefined location within the second radio cell for a predefined transmit power and a predefined signal emission setting of the second radio transmitter. Using the determined transmit power and signal emission settings of the second and measurable first radio transmitters, it is possible to estimate the strength of a radio signal emitted to the predefined location by the second radio transmitter. Since the signal strength at the predefined location has previously been measured, one may now determine a pathloss of radio signal strength due to losses during the propagation from the transmitter to the predefined location, for example because of broadening or scattering of the radio beam. Once the pathloss is known it is possible to determine a radio propagation model that best fits the determined pathloss and assign the previously determined propagation model to the predefined location.

A more detailed description of signal propagation models will be given below.

In some embodiments determining a performance value for a radio cell or a location within a radio cell comprises determining a first radio transmitter which provides the highest level of coverage and capacity for the considered cell or location within the cell, also called "best server". Once a best server is found the remaining first radio transmitters are regarded as interferers, which means that radio signals emitted by the remaining first radio transmitters will cause interference with the radio signal provided by the best server and thus will reduce the Quality of Experience the radio signals upon reception. A level of interference caused by radio signals provided by the remaining first radio transmitters may be determined for the considered cell as a whole or of locations within the cell. Once the serving first radio transmitter and the interfering first radio transmitters are determined a performance value for the considered cell or location within the cell may be determined using the signal data of the serving first radio transmitter and the level of interference induced by the remaining first radio transmitters. This may have the advantage that not only the received signal strength is being considered but also interference effects induced by other radio transmitters are accounted for. Thus the performance value may be well adapted to the actual signal reception conditions.

In some embodiments signal data or model data or both is determined using user equipment such as mobile phones located within the correspondent radio cell. Usage of user equipment measurements is for example enabled by introduction of so called MDT (Minimization of Drive Tests) measurements in LTE release 10. For more details also see "3GPP specification TS37.320, "Radio measurement collection for Minimization of Drive Tests (MDT)"". For determining the location of user equipment within the correspondent cell one may for example use GPS or triangulation using the radio transmitters. Using user equipment for determining signal and/or model data may have the advantage that no further equipment for measurement is required. In addition data is collected by those who actually use the network. Thus the collected signal data may represent the actual conditions very well.

In some embodiments the estimation of signal data is carried out mostly for areas within the second radio cell in which signal data for the set of first radio antennas is not measurable. This is mostly the case in the central regions of the second radio cell. At the edges of the second radio cell radio signals provided by the first radio antennas are almost as strong as radio signals provided by the second radio antenna. Thus at the edges signal data may be directly measured. The measured signal data may then be used during the estimation process for signal data in the central regions of the second radio cell.

In some embodiments the area of the first and second radio cells is subdivided into tiles. Determining the performance values may then be carried out for each tile individually and an overall performance value of a radio cell or for specific parts of the radio cell may then be determined by applying averaging procedures using the performance values of the tiles. Herein the tiles may be of any suitable shape. Referring to the method for determining a radio propagation model it is also possible to determine an average propagation model per tile. Having such a tile structure it is possible to put more weight on certain regions like cell boundaries or areas with a high user density. At the same time the weight for for example rural areas may be kept very low. This may have the advantage that the average performance value of a radio cell may be adapted to the different demands within the different regions of the radio cell.

In some embodiments reception data is being determined additionally to the signal data wherein the reception data is characterizing the location-dependent distribution of measurements. Thus one may use the reception data during determination of the performance value such that the determined performance value also reflects the location-dependent distribution of signal data measurement.

In some embodiments a computer program product comprising computer executable instructions adapted to perform the method described above is provided.

In some embodiments a wireless cellular network system comprising a plurality of radio transmitters providing UE located within radio cells with radio signals is provided, the network further comprising a set of first radio transmitters of a set of first radio cells being adjacent to a second radio cell with a respective second radio transmitter, wherein each first radio transmitter is assigned to a first radio cell, the network system being configured to:

- determine signal-data characterizing the coverage and capacity of the first radio cells by radio signals provided by the first and second radio transmitters;
- determine signal-data characterizing the coverage and capacity of the second radio cell by radio signals provided by the first and second radio transmitters;
- determine performance values characterizing the coverage and capacity of the first radio cells and the original coverage area of the second radio transmitter using the signal-data of radio signals provided by the first radio transmitters;
- determine the signal emission settings of the set of first radio transmitters;
- determine a set of modified signal emission and reception settings for the set of first radio transmitters in order to enhance the performance values of the original coverage area of the second radio transmitter, such that the set of modified signal emission and reception settings enables the set of first radio transmitters to serve as a substitute for the second radio transmitter in regard to coverage and capacity of the original coverage area of the second radio transmitter, while maintaining at least a minimum quality of service for radio signals within the first radio cells; and

- store the modified set of signal emission and reception settings as preset configurations for the subset of first radio transmitters.

In some embodiments the wireless cellular network system further comprises a plurality of UE, located within the first and second radio cells, wherein determining the signal-data comprises at the UE:

- determining by the UE data characterizing a received strength of a radio signal provided by a first or second radio transmitter;
- determining by the UE the location of the UE within a radio cell; and
- forwarding the determined data on received signal strength and UE location to the radio transmitters.

In some embodiments a network management entity being logically connected to a set of first radio transmitters of a set of first radio cells being adjacent to a second radio cell with a respective second radio transmitter, and to the second radio transmitter is provided, wherein each first radio transmitter is assigned to a first radio cell, wherein the radio transmitters are part of a wireless cellular network, the network further comprising at least one network management entity, the network management entity being configured to:

- receive signal-data characterizing the coverage and capacity of the first radio cells by radio signals provided by the first and second radio transmitters;
- receive signal-data characterizing the coverage and capacity of the second radio cell by radio signals provided by the first and second radio transmitters;
- determine performance values characterizing the coverage and capacity of the first radio cells and the original coverage area of the second radio transmitter using the signal-data of radio signals provided by the first radio transmitters;
- receive the signal emission settings of the set of first radio transmitters;
- determine a set of modified signal emission and reception settings for the set of first radio transmitters in order to enhance the performance values of the original coverage area of the second radio transmitter, such that the set of modified signal emission and reception settings enables the set of first radio transmitters to serve as a substitute for the second radio transmitter in regard to coverage and capacity of the original coverage area of the second radio transmitter, while maintaining at least a minimum quality of service for radio signals within the first radio cells, and

- store the modified set of signal emission and reception settings as preset configurations for the subset of first radio transmitters and/or forward the modified set of signal emission and reception settings to the correspondent radio transmitters.

It is understood that one or more of the claims and/or embodiments may be combined as long as the combined elements are not mutually exclusive.

## Brief description of the drawings

In the following preferred embodiments of the invention are described in greater detail by way of example only making reference to the drawings in which:

Fig. 1     is a schematic of a cellular network comprising a plurality of radio cells and radio transmitters,

Fig. 2     is a schematic of a cellular network comprising a plurality of radio cells and radio transmitters wherein one of the radio cells is in outage,

Fig. 3     is a block diagram illustrating the process of data acquisition,

Fig. 4     is a schematic of a cellular network comprising a plurality of radio cells and radio transmitters wherein one radio cell is subdivided into tiles,

Fig. 5     is a schematic of a radio signal propagating from a radio antenna to a radio receiver,

Fig. 6     is a flow diagram illustrating the method for determining preset configurations, and

Fig. 7     is a block diagram of a network management entity.

In the following similar elements are denoted by the same reference numerals.

## Detailed description

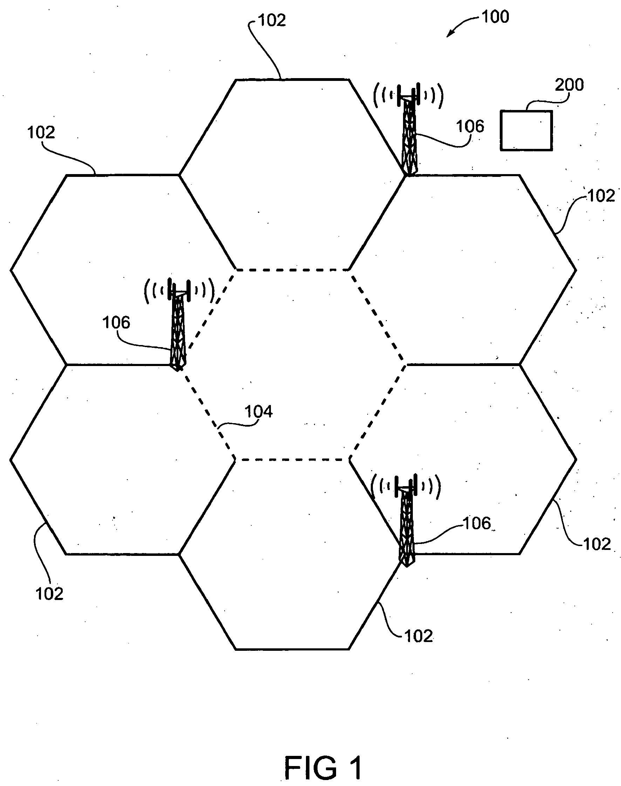

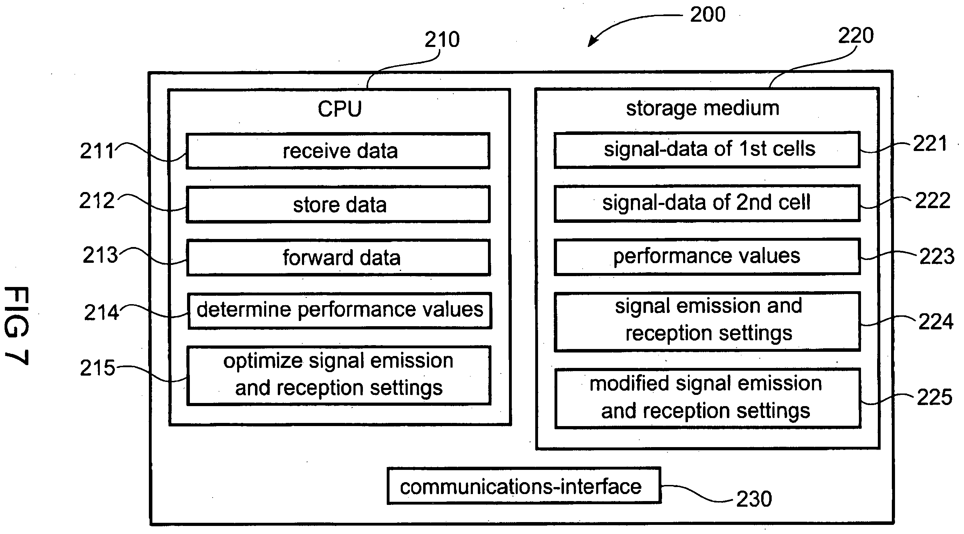

Fig. 1 is a schematic of a cellular network 100. As an example the cellular network 100 comprises seven radio cells and three radio antennas 106. The radio cells are arranged in an alveolar pattern wherein a central radio cell 104 represented by a dashed circumference is surrounded by a set of six radio cells 102. The central radio cell 104 is from now on called second radio cell wherein the outer radio cells 102 are from now on called first radio cells. The radio antennas 106 are situated at the junction of three radio cells such that each radio cell is touched only by one radio antenna 106. The cellular network 100 further comprises a network management entity 200, which will be described in detail with regard to figure 7.

In the cellular network 100 depicted in Fig. 1 each radio antenna 106 comprises three radio transmitters. The signal emission and reception characteristics of a radio transmitter are determined by a set of settings such as tilt and azimuth of the radio transmitter or the emitted radio signal power. These settings are designed such that a radio transmitter is capable of providing user equipment located within the respective radio cell with radio signals having a bandwidth, sufficient satisfy the demands of network users. The radio transmitter providing the second radio cell 104 with radio signals is from now on called second radio transmitter and the radio transmitters providing the first radio cells 102 with radio signals are from now on called first radio transmitters.

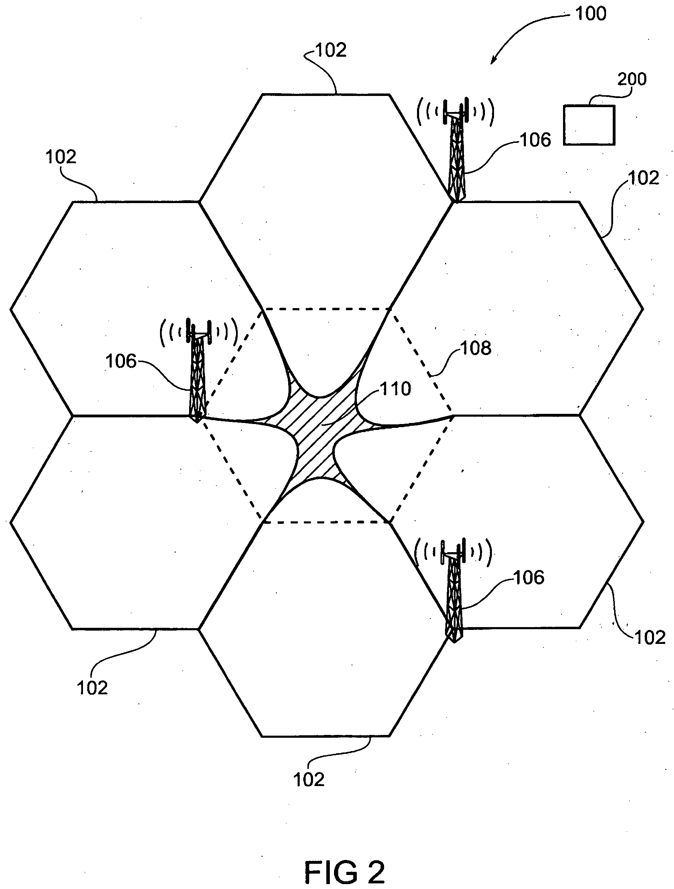

Fig. 2 is a schematic of a cellular network 100 comprising a number of radio cells and radio antennas 106 as described before, yet in the situation depicted in Fig. 2 the second radio transmitter is shut down or malfunctioning. As a result the second radio cell 104 does no longer exist. Thus the dashed hexagon 108 only represents the original coverage area of the second radio transmitter. As illustrated in Fig. 2 the first radio cells 102 extend at least in part into the original coverage area of the second radio transmitter 108. As a result even in case of failure of the second radio transmitter a certain level of coverage with radio signals within the original coverage area of the second radio transmitter 108 is maintained. The partial coverage of the original coverage area of the second radio transmitter 108 is in this situation provided by the first radio transmitters.

Usually the signal emission and reception settings of the first radio transmitters are not adapted to the situation where the second radio transmitter is in outage. As a result covering holes 110 within the original coverage area of the second radio transmitter 108 may exist. Yet in most cases it is possible to determine signal emission and reception settings for the first radio transmitters such that a certain level of coverage and capacity of the original coverage area of the second radio transmitter 108 with radio signals provided by the first radio transmitters can be guaranteed. At the same time the coverage and capacity of the first radio cells 102 is maintained at a highest possible level.

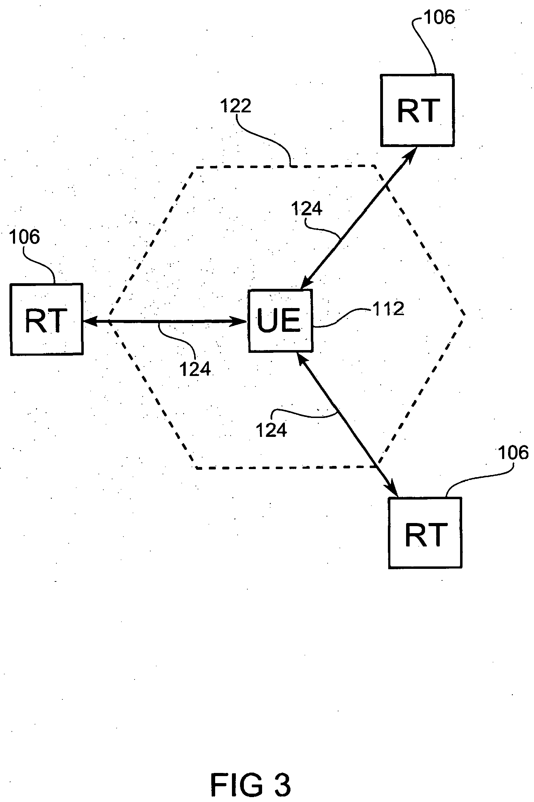

Fig. 3 is a block diagram illustrating a process of data acquisition. A number of radio transmitters 106 located within the vicinity of a radio cell 122 and user equipment 112 located within radio cell 122 are involved in the process of data acquisition. The object of the data acquisition process is to obtain data from which a coverage and capacity status of one or more radio cells may be derived assuming that the original serving transmitter of a radio cell is out of order.

In accordance with some embodiments such data may be obtained by signal plink and downlink measurements 124. For example a downlink measurement may comprise measuring the strength of a received radio signal provided by a certain radio transmitter using user equipment at a certain location within the radio cell 122. Upon measuring the received radio signal strength for all the radio signals measurable which are provided by the multiple radio transmitters, one may determine which radio transmitter provides the highest radio signal strength and define this radio transmitter as the best server. The signal data for radio signals provided by the best server is then being dropped since as described before the situation in which the best server is out of order is of interest. Now it is assumed that the transmitter with the second highest radio signal strength or another best suited transmitter will adopt the role of the best server once the original best server is shut down or malfunctioning.

As a result one may calculate a signal-to-interference ratio assuming that all the other received radio signals provided by the remaining radio transmitters act as interferers.

In addition to the signal strength of radio signals provided by the new best server the SINR of the received radio signal as well as the throughput per Hertz bandwidth may be measured. Using such a dataset one may calculate a performance value for a certain location within the radio cell in accordance with a specific performance metric. The location of the user equipment 112 within the radio cell 122 may be determined by GPS measurement or by triangulation using the radio transmitters.

By collecting datasets for different locations within the radio cell 122 one may create a map representing the distribution of performance values within the radio cell 122. Knowing the signal emission and reception settings of the radio transmitters 106 one may now estimate how the performance values change if the signal emission and reception settings of the radio transmitters 106 are varied. As a result it is merely a question of numerical optimization to find a set of signal emission and reception settings for the radio transmitters 106 that yields a performance value for the radio cell 122 high enough to satisfy a predefined standard for Quality of Service. The corresponding signal emission and reception settings for the radio transmitters 106 may then be stored and later applied once a radio cell outage is detected.

The signal emission and reception settings for the radio transmitters are from now on referred to as preset configurations. Using the measurements described before it is possible to find preset configurations for different cases. One case where a preset configuration may be applied is the spontaneous failure of one or more radio transmitters and as a result the outage of the corresponding radio cells. Since such an outage cannot be predicted the preset configuration has to be determined such that even in the case of high demanded network load a sufficient coverage and capacity for the cells in outage may be provided by the remaining radio transmitters.

Another case is the controlled shutdown of a radio transmitter for energy saving purpose. In this case it is possible to determine the required level of coverage and capacity of the radio cell to shut down and adapt the preset configurations to these requirements. As an example the required capacity of a radio cell will be pretty low at midnight wherein it might be very high during noon. Thus a minimum Quality of Service may be defined for each of these situations.

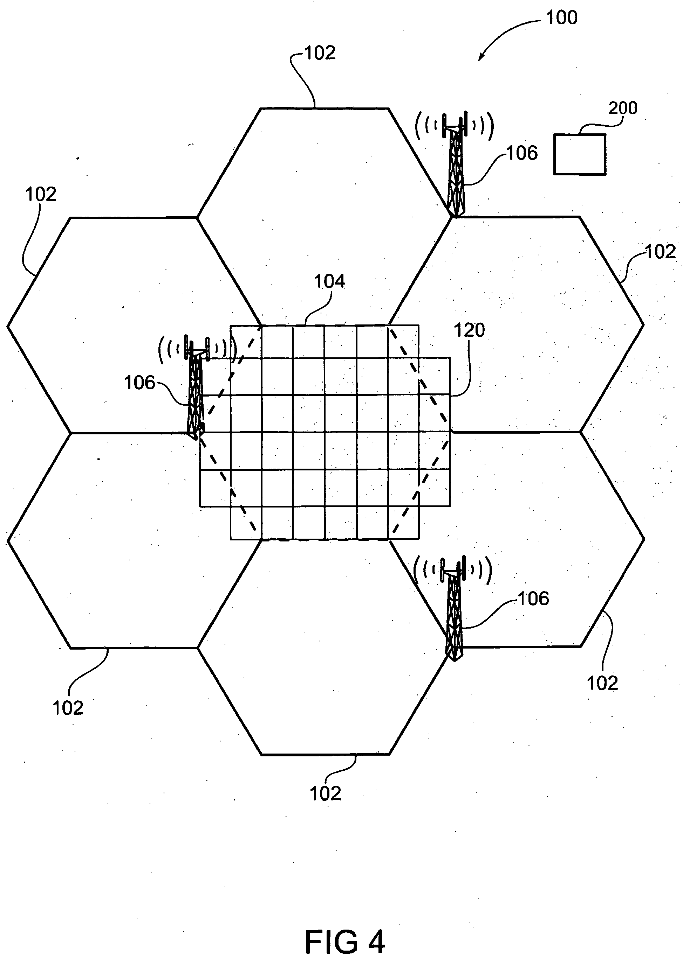

Fig. 4 is a schematic of a cellular network system 100 as described in Fig. 1 wherein the central radio cell 104 is subdivided into tiles using a grid 120. In most cases it is not possible to collect measurements as described before for individual locations within the radio cell. Rather one receives statistical information on a certain area within the radio cell. Thus it is useful to divide the radio cell into small areas and conduct measurements for a number of locations within these areas. As a result it is possible to determine an average performance value for the individual tiles. The overall performance value for a radio cell may then be determined using arithmetic averaging or weighted averaging procedures using the performance values of the individual tiles. For example one may put more weight on tiles which comprise cell border areas or put less weight on tiles which comprise mostly farmland.

The grid 120 in Fig. 4 employs of a regular pattern of rectangular shaped tiles. Yet it is also possible to use a grid which is adapted to geographical constraints. For example one may choose the tile shapes such that tiles mostly comprise urban environments, rural environments or in general environments of the same scattering type. In this case it is not necessary to use a grid with a regular pattern. The tiles may have different sizes which may be considered by appropriate weighting factors.

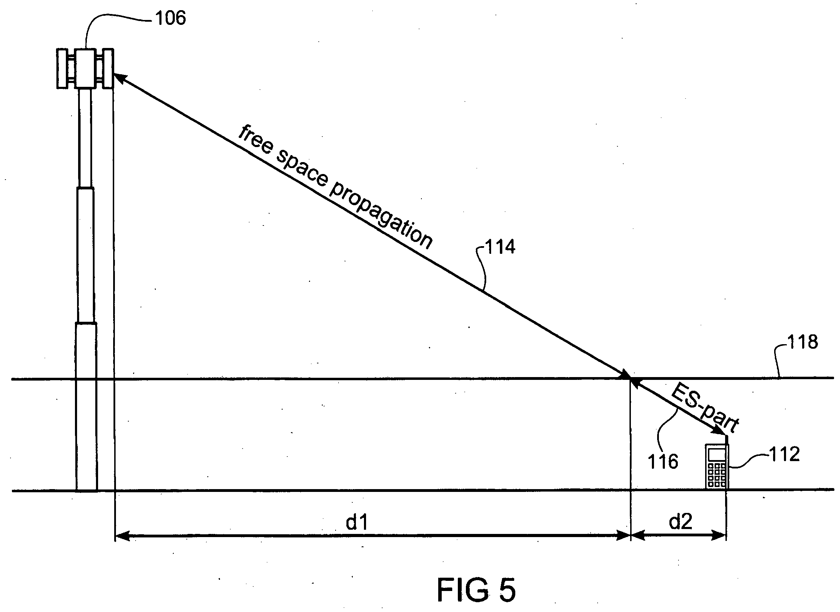

Fig. 5 is a schematic of a radio signal propagating from a radio antenna 106 to user equipment 112. The kind of radio propagation depicted in Fig. 5 is also called an air-to-ground link since the radio transmitter of radio antenna 106 is up in the air and the receiver of the user equipment (UE) 112 is down on the ground. The radio signal path from transmitter to receiver is divided into two segments which are a free space propagation part 114 and an environment specific part (ES-part) 116. The free space propagation part 114 reaches from the radio transmitter to a scattering line 118 and the environment specific part 116 reaches from the scattering line 118 to the radio receiver. The horizontal distance from the radio antenna 106 to the point where the radio signal crosses the scattering line 118 is called $d_1$ and the horizontal distance from the point where the radio signal crosses the scattering line 118 to the user equipment 112 is called $d_2$.

Especially in reuse-1 radio systems like LTE the problem arises that aside from the radio signal provided by the radio transmitter which was originally assigned to the radio cell no other radio signals from other radio transmitters are measurable within the radio cell. This is a problem especially in the central regions of the radio cell. Thus for these situations it is very hard or even impossible to conduct the data acquisition as described before. Yet if the signal emission and reception settings of a radio antenna are known it is possible to estimate the strength of radio signals provided by the radio transmitter at a certain location within the radio cell using physical or empirical laws for beam propagation. Because of the broadening of a radio beam during propagation and because of scattering of the radio beam by solid objects in the propagation path a radio signal suffers a specific path-loss upon propagating from a radio transmitter to a receiver.

For more details on path-loss of radio signals see "Keith T. Herring et al. "Path-Loss Characteristics of Urban Wireless Channels" IEEE Transactions On Antennas And Propagation, Vol. 58, No. 1, pp. 171-176, Jan 2010"

If the path from radio transmitter to receiver contains no scattering objects an estimation using physical laws for beam propagation may provide acceptable results yet in most cases a signal propagation path will contain scattering objects such as trees; buildings or even moving objects like trains and cars. In most situations at least a part of the signal propagation path will not contain any scattering objects and is therefore called free space propagation path. At a certain height above the ground a radio signal will experience scattering and thus one may determine a so called scattering line 118. Below this scattering line 118 the radio signal will be scattered depending on the type of environment. Therefore this part of the radio propagation path from the scattering line to the receiver is called environment specific part 116. The height of the scattering line above ground depends on the buildings or objects at the respective location.

Different types of environments such as rural, sub-urban or urban areas will have different scattering behaviors and thus will show different path-loss characteristics. Several models which describe the propagation of radio signals in such scattering environments like Hata, COST-Hata and Walfisch-Ikegami are known. Yet the task remains to find out which model best fits the signal propagation for a certain location or region within a radio cell.

One possible solution to this problem is to conduct signal strength measurements for radio signals provided by the original serving radio transmitter of a radio cell. Knowing the signal emission settings of the radio transmitter one may estimate a path-loss of signal strength caused by the propagation of a radio signal to a certain location within the cell. This may be done assuming that no scattering objects are contained in the propagation path. By measuring the actual received signal strength one may compare the result with the estimated signal strength and using those findings one may determine which of the known models or which newly developed model best fits those results. By repeating such a measurement for different locations within the radio cell one may determine a map containing information on which location or area is best described by which propagation model. Having such a map one may estimate the received signal strength of radio signals provided by a radio transmitter which has not been measurable previously at a certain location within the radio cell. Thus signal data may be estimated.

It may be useful to adapt the tile structure as depicted in Fig. 4 and determine radio propagation models for each of the tiles. As a result one may define an average propagation model per tile.

In summary it is possible to either measure signal data or to estimate signal data using radio propagation models and using the signal data one may determine a performance value for the cell or for parts of the radio cell. Using these performance values an optimization of preset configurations for the radio transmitters considering the case in which one or more radio transmitters may fail or be shut down may be conducted.

A first example for a radio propagation model for predicting signal strength and throughput information is dedicated to cases revealing a long range homogeneity concerning propagation statistics which is sufficiently described by well-known path-loss models like Hata, COST-HATA, Walfish-Ikegami or 3GPP models. Typical cases could be for example flat, rural areas. In this case a fragmentation of the radio propagation path into a free space propagation 114 and an environment specific part 116 may not be necessary.

A second example is preferably suited for smaller tiles within macro radio cells with above rooftop antennas. It does not require detailed information and description of the spatial dependence of signal data on the location of the UE within the tile. Also, detailed geo-information about topology and obstacles/building within the tile is not required ,e.g., location, height, and orientation of buildings, streets, hills, etc. Signal data gained from UEs located within the tile provide a representative probability density distribution $P_{PL}$ of reception conditions within the tile in dependence of the tile location and of the free space propagation 114 distance $d_1$. So, from a statistical point of view, the pathloss is described by the free space propagation loss $PL(d_1)$ plus an average pathloss value $A_{PL}$ calculated from the statistical probability density distribution $P_{PL}$.

A third example is preferably suited in case of larger tile sizes with respect to UE localization accuracy, areas that are quite homogeneous with respect to propagation conditions and lower antenna heights. The statistical pathloss probability density distribution $P_{PL}$ within a distinct area can then be described as the free space prop-agation loss $PL(d_1)$ plus a distance, $d_2$ dependent average pathloss value $A_{PL}(d_2)$, now calculated from the distance $d_2$ dependent statistical probability density distribution $P_{PL}(d_2)$.

A fourth example can be preferably used when more detailed geo-information about topology and obstacles/buildings is available, so that distance $d_2$ dependent statistics can be applied separately for LOS (Line of Sight), NLOS (Non-Line of Sight) outdoor, and NLOS indoor conditions. By that way, location specific dependencies of the LOS probability on antenna azimuth as well as location specific probability density distribution $P_{PL}$ for indoor and outdoor NLOS reception conditions can be applied, respectively. The total pathloss statistics for a distinct location can now be described for example as free space propagation loss part $PL(d_1)$ plus an location specific part

$$PL_{total} = PL(d_1) + \begin{cases} A_{PL}^{LOS}(d_2) \\ A_{PL}^{NLOS\ indoor}(d_2) \\ A_{PL}^{NLOS\ outdoor}(d_2) \end{cases}$$

with $A_{PL}$ denoting an average value representing the respective pathloss probability density distribution $P_{PL}$.

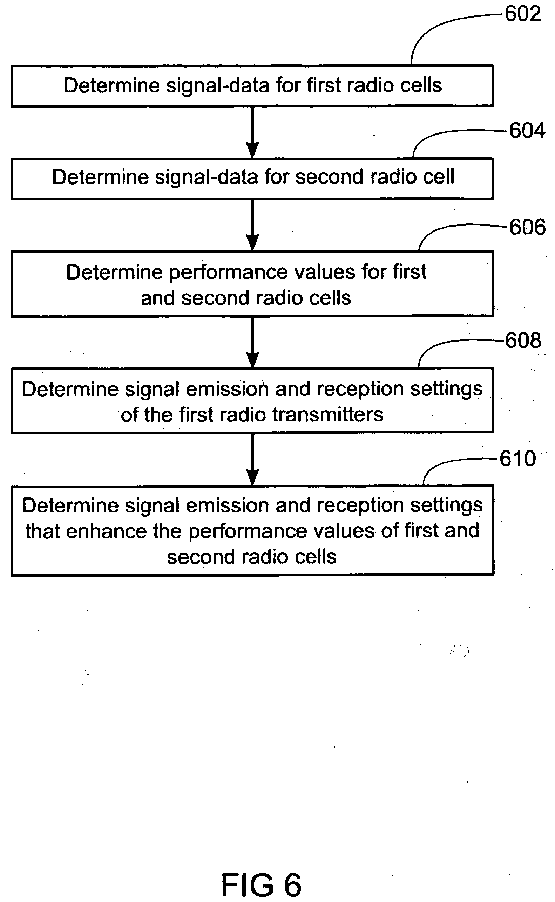

Fig. 6 is a flow-diagram illustrating the method for determining preset configurations for the set of first radio transmitters, such that radio signals emitted from the first set of radio transmitters may serve as a substitute for radio signals emitted by the second radio transmitter within the original coverage area of the second radio transmitter once the second radio transmitter is in outage.

In a first method step 602 signal-data characterizing the coverage and capacity of the first radio cells by radio signals provided by the first and second radio transmitters is being determine. This may for example be done by signal up- and downlink measurements using UE located within the respective radio cells. Additional data like a signal to noise plus interference ratio, neighbor cell information, number of neighbor cells, capabilities of the UE like transmit power or current availability and precision of position information, may also be collected.

In a second method step 604 signal-data characterizing the coverage and capacity of the second radio cell by radio signals provided by the first and second radio transmitters is being determined as described with regard to the first method step.

In a third method step 606 performance values characterizing the coverage and capacity of the first and second radio cells using the signal-data of radio signals provided by the first radio transmitters are being determined. This may be done using a certain performance metric, that yields a performance value in dependence of at least a subset of the parameters previously determined as signal-data. Determining the performance values may be carried out by any means suitable, like for example a network management entity as described with regard to figure 7.

In a fourth method step 608 the signal emission and reception settings of the first radio antennas are determined. Signal emission and reception settings may comprise the tilt and azimuth of the radio transmitters, the shape of the emitted radio beam, the radio transmit power, or other parameters that have any influence on the signal emission and reception characteristics of the radio transmitters. Determining those settings may for example be done by using a remote access to a radio transmitter or the respective base station.

In a fifth method step 610 a set of modified signal emission and reception settings for the set of first radio transmitters is determined in order to enhance performance values of the original coverage area of the second radio transmitter. This is preferably done such that the radio signals provided by the first radio transmitters may serve as a substitute for the radio signals provided by the second radio transmitter within the original coverage area of the second radio transmitter, once the second radio transmitter is in outage. At the same time at least a minimum quality of service for radio signals within the first radio cells should be maintained. As described before with regard to determining the performance values the step of determining a set of modified signal emission and reception settings may also be carried out by any means suitable, like for example a network management entity.

Once a suitable set of signal emission and reception settings for the set of first radio transmitters is found, the set may for example be stored within a network management entity or may be forwarded to the base stations of the respective transmitters.

Fig. 7 is a block diagram of a network management entity 200. The network management entity 200 comprises a central processing unit (CPU) 210, a storage medium 220 and a communications-interface 230. The CPU 210 is operatively coupled to the communications-interface 230 and to the storage medium 220. The CPU 210 further comprises program modules configured to receive data 211 using the communications-interface 230, store data 212 like signal-data, performance values or signal emission and reception settings to correspondent storage areas within storage medium 220, forward data 213 to external entities using the communications-interface 230, determine performance values 214 using the signal-data stored in storage medium 220 or using signal-data which has been recently received using communications-interface 230, and optimize signal emission and reception settings 215 using signal-data and signal emission and reception settings stored within storage medium 220 or recently received using communications-interface 230. Storage medium 220 comprises storage areas for signal-data of the first radio cells 221, signal-data of the second radio cells 222, performance values 223, signal emission and reception settings 224 and modified signal emission and reception settings 225.

In operation the network management entity may in a first step receive 211 signal-data of the first and second radio cells using communications-interface 230. The CPU 210 may then either store 212 the recently received data to the corresponding storage areas 221,222 within storage medium 220 or directly process the data and determine performance values 214 for the radio cells or cell areas. The performance values may then either be stored to the corresponding storage area 223 within storage medium 220, or processed by the CPU 210 if signal emission and reception settings of the radio transmitters have already been received 211 using the communications-interface 230 and stored 212 to the corresponding storage area 224. Using the performance values and the signal emission and reception settings of the radio transmitters the CPU 210 may now conduct the optimization 215 of the signal emission and reception settings as described above. The results of this process may then either be stored 212 in the corresponding storage area 225 or forwarded 213 to external entities using communications-interface 230.

Note that the network management entity as described above is merely for illustrative purposes and is not restrictive. The various method steps of the method as described before may also be carried out by a number of network management entities in a decentralized approach.

**List of reference numerals**

| | |
|---|---|
| 100 | cellular network |
| 102 | first radio cell |
| 104 | second radio cell |
| 106 | radio transmitter |
| 108 | original coverage area of the second radio transmitter |
| 110 | coverage hole |
| 112 | user equipment |
| 114 | free space propagation-part |
| 116 | ES-part |
| 118 | scattering line |
| 120 | grid |
| 122 | radio cell |
| 124 | up- & downlink measurements |
| 200 | network management entity |
| 210 | CPU |
| 211 | program module |
| 212 | program module |
| 213 | program module |
| 214 | program module |
| 215 | program module |
| 220 | storage medium |
| 221 | storage area |
| 222 | storage area |
| 223 | storage area |
| 224 | storage area |
| 225 | storage area |
| 230 | communications-interface |

**Claims**

1. A method for determining preset configurations for a set of first radio transmitters (106) of a set of first radio cells (102) being adjacent to a second radio cell (104) with a respective second radio transmitter, wherein each first radio transmitter is assigned to a first radio cell, the preset configurations being designed to enable radio signals emitted from the first set of radio transmitters to serve as a substitute for radio signals emitted by the second radio transmitter within the original coverage area of the second radio transmitter (108) once the second radio transmitter is in outage, the method comprising:

- determining signal-data characterizing the coverage and capacity of the first radio cells by radio signals provided by the first and second radio transmitters;
- determining signal-data characterizing the coverage and capacity of the second radio cell by radio signals provided by the first and second radio transmitters;
- determining performance values characterizing the coverage and capacity of the first and second radio cells using the signal-data of radio signals provided by the first radio transmitters,
- determining the signal emission and reception settings of the set of first radio transmitters;
- determining a set of modified signal emission and reception settings for the set of first radio transmitters in order to enhance performance values of the original coverage area of the second radio transmitter, such that the set of modified signal emission and reception settings enables the set of first radio transmitters to serve as a substitute for the second radio transmitter in regard to coverage and capacity of the original coverage area of the second radio transmitter, while maintaining at least a minimum quality of service for radio signals within the first radio cells; and
- storing the modified set of signal emission and reception settings as preset configurations for the subset of first radio transmitters.

2. A method for determining preset configurations for a set of first radio transmitters of a set of first radio cells being adjacent to a second radio cell with a respective second radio transmitter, wherein each first radio transmitter is assigned to a first radio cell, the preset configurations being designed to enable radio signals emitted from the first set of radio transmitters to serve as a substitute for radio signals emitted by the second radio transmitter within the original coverage area of the second radio transmitter once the second radio transmitter is in outage, wherein the radio transmitters are part of a wireless cellular network, the network further comprising at least one network management entity, the method comprising at a network management entity:

- receiving signal-data characterizing the coverage and capacity of the first radio cells by radio signals provided by the first and second radio transmitters;
- receiving signal-data characterizing the coverage and capacity of the second radio cell by radio signals provided by the first and second radio transmitters;
- determining performance values characterizing the coverage and capacity of the first and second radio cells using the signal-data of radio signals provided by the first radio transmitters,
- receiving the signal emission and reception settings of the set of first radio transmitters;
- determining a set of modified signal emission and reception settings for the set of first radio transmitters in order to enhance the performance values of the original coverage area of the second radio transmitter, such that the set of modified signal emission and reception settings enables the set of first radio transmitters to serve as a substitute for the second radio transmitter in regard to coverage and capacity of the original coverage area of the second radio transmitter, while maintaining at least a minimum quality of service for radio signals within the first radio cells;
- storing the modified set of signal emission and reception settings as preset configurations for the subset of first radio transmitters and/or forwarding the modified set of signal emission and reception settings to the correspondent radio transmitters.

3. The method of any of the previous claims, wherein determining the set of modified signal emission and reception settings is performed by a numerical optimization.

4. The method of claim 3, wherein determining the set of modified signal emission and reception settings for the set of first radio transmitters comprises:

a. determining a varied set of signal emission and reception settings for the first radio transmitters

b. determining performance values for the first radio cells and the original coverage area of the second radio transmitter for the varied set of signal emission and reception settings of the first radio transmitters assuming that the second radio transmitter is in outage;

c. determining whether the performance values for the varied set of signal emission and reception settings are equal or higher than a predefined minimum for the performance values;

d. if the performance values for the varied set of signal emission and reception settings are equal or higher than a predefined minimum for the performance values, storing and/or forwarding the modified set of signal emission and reception settings as preset configurations for the subset of first radio transmitters; and

e. if the performance values for the varied set of signal emission and reception settings are below a predefined minimum for the performance values go back to method step a.

5. The method of any of the previous claims, wherein a model for signal propagation within the second radio cell is determined, using model-data characterizing the location dependent coverage and capacity for a predefined transmit power and signal emission and reception setting of the second radio transmitter, and wherein signal-data for original coverage area of the second radio transmitter is estimated using the derived model for signal propagation and the signal emission settings of the set of first radio transmitters.

6. The method of any of the previous claims, wherein determining the model for signal propagation within the original coverage area of the second radio transmitter comprises:

- determining model-data characterizing a received signal strength or signal strength distribution at a predefined location within the second radio cell for a predefined transmit power and predefined signal emission settings of the second radio transmitter;

- determining the strength of a radio signal emitted to the predefined location by the second radio transmitter using the transmit power and the signal emission settings of the second radio transmitter;

- determining a pathloss of radio signal power due to propagation from the radio transmitter to the predefined location;

- determining a model for signal propagation that best fits the determined pathloss; and

- assigning the previously determined model to the location.

7. The method of any of the previous claims, wherein determining the performance value for a radio cell or a location within a radio cell comprises:

- determining a serving first radio transmitter which provides the highest level of coverage and capacity for the considered cell or location within the cell;

- determining a level of interference induced by the remaining first radio transmitters for the considered cell or location within the cell; and

- determining a performance value for the considered cell or location within the cell using the signal-data of the serving first radio transmitter and the level of interference induced by the remaining first radio transmitters.

8. The method of any of the previous claims, wherein signal-data and/or model-data is determined using signal strength and UE-location data of the UE (112) within the correspondent cell.

9. The method of any of the previous claims, wherein the estimation of signal-data is carried out for areas of the second radio cell in which signal-data for radio signals provided by the set of first radio transmitter is not measurable.

10. The method of any of the previous claims, wherein the second and/or first radio cells are subdivided into tiles, wherein performance values are determined for the tiles, and wherein using the performance values of the tiles an overall performance value of a radio cell and/or for specific parts of the cell is determined.

11. The method of any of the previous claims, wherein upon measurement of signal-data also reception-data characterizing the location-dependent distribution of measurements is determined and wherein the determining of performance values also uses the reception-data.

12. A computer program product comprising computer executable instructions adapted to perform the method steps defined in any of the above claims.

13. A wireless cellular network system (100) comprising a plurality of radio transmitters providing UE located within radio cells with radio signals, the network further comprising a set of first radio transmitters of a set of first radio cells being adjacent to a second radio cell with a respective second radio transmitter, wherein each first radio transmitter is assigned to a first radio cell, the network system being configured to:

- determine signal-data characterizing the coverage and capacity of the first radio cells by radio signals provided by the first and second radio transmitters;

- determine signal-data characterizing the coverage and capacity of the second radio cell by radio signals provided by the first and second radio transmitters;

- determine performance values characterizing the coverage and capacity of the first radio cells and the original coverage area of the second radio transmitter using the signal-data of radio signals provided by the first radio transmitters;

- determine the signal emission settings of the set of first radio transmitters;

- determine a set of modified signal emission and reception settings for the set of first radio transmitters in order to enhance the performance values of the original coverage area of the second radio transmitter, such that the set of modified signal emission and reception settings enables the set of first radio transmitters to serve as a substitute for the second radio transmitter in regard to coverage and capacity of the original coverage area of the second radio transmitter, while maintaining at least a minimum quality of service for radio signals within the first radio cells; and

- store the modified set of signal emission and reception settings as preset configurations for the subset of first radio transmitters.

14. The wireless cellular network system of claim 13, further comprising a plurality of UE, located within the first and second radio cells, wherein determining the signal-data comprises at the UE:

- determining by the UE data characterizing a received strength of a radio signal provided by a first or second radio transmitter;
- determining by the UE the location of the UE within a radio cell; and
- forwarding the determined data on received signal strength and UE location to the radio transmitters.

15. A network management entity (200) being logically connected to a set of first radio transmitters of a set of first radio cells being adjacent to a second radio cell with a respective second radio transmitter, and to the second radio transmitter, wherein each first radio transmitter is assigned to a first radio cell, wherein the radio transmitters are part of a wireless cellular network, the network further comprising at least one network management entity, the network management entity being configured to:

- receive (211) signal-data characterizing the coverage and capacity of the first radio cells by radio signals provided by the first and second radio transmitters;
- receive signal-data characterizing the coverage and capacity of the second radio cell by radio signals provided by the first and second radio transmitters;
- determine performance values (214) characterizing the coverage and capacity of the first radio cells and the original coverage area of the second radio transmitter using the signal-data of radio signals provided by the first radio transmitters;
- receive the signal emission settings of the set of first radio transmitters;
- determine a set of modified signal emission and reception settings for the set of first radio transmitters in order to enhance the performance values of the original coverage area of the second radio transmitter (215), such that the set of modified signal emission and reception settings enables the set of first radio transmitters to serve as a substitute for the second radio transmitter in regard to coverage and capacity of the original coverage area of the second radio transmitter, while maintaining at least a minimum quality of service for radio signals within the first radio cells; and

- store (212) the modified set of signal emission and reception settings as preset configurations for the subset of first radio transmitters and/or forward (213) the modified set of signal emission and reception settings to the correspondent radio transmitters.

**Patentansprüche**

1. Verfahren zum Bestimmen voreingestellter Konfigurationen für einen Satz erster Funksender (106) eines Satzes erster Funkzellen (102) in der Nachbarschaft zweiter Funkzellen (104) mit ihrem entsprechenden zweiten Funksender, wobei jeder erste Funksender einer ersten Funkzelle zugeordnet ist, wobei die voreingestellten Konfigurationen ausgelegt sind für das Aktivieren von Funksignalen, die von dem ersten Satz von Funksendern ausgestrahlt werden, um als Ersatz für Funksignale zu fungieren, die von dem zweiten Funksender innerhalb des ursprünglichen Abdeckungsbereichs des zweiten Funksenders (108) ausgestrahlt werden, sobald der zweite Funksender ausfällt, wobei das Verfahren umfasst:

- das Bestimmen von Signaldaten, welche die Abdeckung und Kapazität der ersten Funkzellen durch Funksignale kennzeichnen, die von dem ersten und dem zweiten Funksender bereitgestellt werden;
- das Bestimmen von Signaldaten, welche die Abdeckung und Kapazität der zweiten Funkzelle durch Funksignale kennzeichnen, die von dem ersten und dem zweiten Funksender bereitgestellt werden;
- das Bestimmen von Leistungswerten, welche die Abdeckung und Kapazität der ersten und der zweiten Funkzellen unter Verwendung der Signaldaten von Funksignalen kennzeichnen, die von den ersten Funksendern zur Verfügung gestellt werden,
- das Bestimmen von Einstellungen der Signalabgabe und des Signalempfangs des Satzes erster Funksender;
- das Bestimmen eines Satzes modifizierter Einstellungen für Signalabgabe und Signalempfang für den Satz erster Funksender, um die Leistungswerte des Originalabdeckungsbereichs des zweiten Funksenders zu verbessern, dergestalt, dass der Satz modifizierter Einstellungen für Signalabgabe und Signalempfang den Satz erster Funksender in die Lage versetzt, hinsichtlich Abdeckung und Kapazität des Originalabdeckungsbereichs des zweiten Funksenders als Ersatz für den zweiten Funksender zu dienen, während mindestens ein Minimum an Dienstgüte für Funksignale in den ersten Funkzellen aufrechterhalten wird; und

- das Speichern des modifizierten Satzes von Einstellungen für Signalabgabe und Signalempfang als voreingestellte Konfigurationen für den Teilsatz erster Funksender.

2. Verfahren zum Bestimmen voreingestellter Konfigurationen für einen Satz erster Funksender eines Satzes erster Funkzellen in der Nachbarschaft zweiter Funkzellen mit ihrem entsprechenden zweiten Funksender, wobei jeder erste Funksender einer ersten Funkzelle zugeordnet ist, wobei die voreingestellten Konfigurationen ausgelegt sind für das Aktivieren von Funksignalen, die von dem ersten Satz von Funksendern ausgestrahlt werden, um als Ersatz für Funksignale zu fungieren, die von dem zweiten Funksender innerhalb des ursprünglichen Abdeckungsbereichs des zweiten Funksenders ausgestrahlt werden, sobald der zweite Funksender ausfällt, wobei die Funksender Teil eines drahtlosen zellularen Netzes sind, wobei das Netz weiterhin mindestens eine Netzverwaltungseinheit umfasst, wobei das Verfahren an der Netzverwaltungseinheit umfasst:

- den Empfang von Signaldaten, welche die Abdeckung und Kapazität der ersten Funkzellen durch Funksignale kennzeichnen, die von dem ersten und dem zweiten Funksender bereitgestellt werden;
- den Empfang von Signaldaten, welche die Abdeckung und Kapazität der zweiten Funkzelle durch Funksignale kennzeichnen, die von dem ersten und dem zweiten Funksender bereitgestellt werden;
- das Bestimmen von Leistungswerten, welche die Abdeckung und Kapazität der ersten und der zweiten Funkzellen unter Verwendung der Signaldaten von Funksignalen kennzeichnen, die von den ersten Funksendern zur Verfügung gestellt werden,
- den Empfang von Einstellungen der Signalabgabe und des Signalempfangs des Satzes erster Funksender;
- das Bestimmen eines Satzes modifizierter Einstellungen für Signalabgabe und Signalempfang für den Satz erster Funksender, um die Leistungswerte des Originalabdeckungsbereichs des zweiten Funksenders zu verbessern, dergestalt, dass der Satz modifizierter Einstellungen für Signalabgabe und Signalempfang den Satz erster Funksender in die Lage versetzt, hinsichtlich Abdeckung und Kapazität des Originalabdeckungsbereichs des zweiten Funksenders als Ersatz für den zweiten Funksender zu dienen, während mindestens ein Minimum an Dienstgüte für Funksignale in den ersten Funkzellen aufrechterhalten wird;

- das Speichern des modifizierten Satzes von Einstellungen für Signalausgabe und Signalempfang als voreingestellte Konfigurierungen für den Teilsatz erster Funksender und/oder das Weiterleiten des modifizierten Satzes von Einstellungen für Signalausgabe und Signalempfang an die entsprechenden Funksender.

3. Das Verfahren nach einem jeglichen der vorgenannten Ansprüche, wobei das Bestimmen des Satzes modifizierter Einstellungen für Signalausgabe und Signalempfang durch eine nummerische Optimierung vorgenommen wird.

4. Das Verfahren nach Anspruch 3, wobei das Bestimmen des Satzes modifizierter Einstellungen für Signalausgabe und Signalempfang für den Satz erster Funksender umfasst:

a. das Bestimmen eines variierten Satzes von Einstellungen für Signalausgabe und Signalempfang für die ersten Funksender;
b. das Bestimmen von Leistungswerten für die ersten Funkzellen und den Originalabdeckungsbereich des zweiten Funksenders für den variierten Satz von Einstellungen für Signalausgabe und Signalempfang des ersten Funksenders unter der Annahme, dass der zweite Funksender ausgefallen ist;
c. das Bestimmen, ob die Leistungswerte für den variierten Satz von Einstellungen für Signalausgabe und Signalempfang gleich oder höher sind als ein vordefiniertes Minimum für die Leistungswerte;
d. wenn die Leistungswerte für den variierten Satz von Einstellungen für Signalausgabe und Signalempfang gleich oder höher sind als ein vordefiniertes Minimum für die Leistungswerte sind, das Speichern und/oder Weiterleiten des modifizierten Satzes von Einstellungen für Signalausgabe und Signalempfang als voreingestellte Konfigurierungen für den Teilsalz des ersten Funksenders; und
e. wenn die Leistungswerte für den variierten Satz von Einstellungen für Signalausgabe und Signalempfang niedriger sind als ein vordefiniertes Minimum für die Leistungswerte, das Zurückkehren zu Schritt a.

**5.** Das Verfahren nach einem jeglichen der vorgenannten Ansprüche, wobei ein Modell für die Signalausbreitung innerhalb der zweiten Funkzelle bestimmt wird, was unter Verwendung von Modelldaten erfolgt, welche die standortabhängige Abdeckung und Kapazität für eine vordefinierte Sendeleistung und für die Einstellungen für Signalausgabe und Signalempfang des zweiten Funksenders charakterisieren, und wobei Signaldaten für den Originalabdeckungsbereich des zweiten Funksenders unter Verwendung des abgeleiteten Modells für die Signalausbreitung und die Einstellungen für die Signalausgabe des Satzes erster Funksender abgeschätzt werden.

**6.** Das Verfahren nach einem jeglichen der vorgenannten Ansprüche, wobei das Bestimmen des Modells für die Signalausbreitung innerhalb des Originalabdeckungsbereichs des zweiten Funksenders umfasst:

- das Bestimmen von Modelldaten, welche eine Stärke eines empfangenen Signals oder eine Signalstärkenverteilung an einem vordefinierten Standpunkt innerhalb der zweiten Funkzelle für eine vordefinierte Sendeleistung und für vordefinierte Signalabgabeeinstellungen des zweiten Funksenders charakterisieren;
- das Bestimmen der Stärke eines Funksignals, das vom zweiten Funksender unter Verwendung der Sendeleistung und der Signalabgabeeinstellungen des zweiten Funksenders an den vordefinierten Standort gesendet werden;
- das Bestimmen eines Pfadverlusts der Funksignalleistung aufgrund der Ausbreitung von dem Funksender zu dem vordefinierten Standort;
- das Bestimmen eines Modells für die Signalausbreitung, das am besten auf den bestimmten Pfadverlust passt; und
- das Zuweisen des zuvor bestimmten Modells zu dem Standort.

**7.** Das Verfahren nach einem jeglichen der vorgenannten Ansprüche, wobei das Bestimmen des Leistungswerts für eine Funkzelle oder für einen Standort innerhalb der Funkzelle umfasst:

- das Bestimmen eines bedienenden ersten Funksenders, welcher das höchste Maß an Abdeckung und Kapazität für die in Betracht gezogene Zelle oder den in Betracht gezogenen Standort innerhalb der Zelle bietet;
- das Bestimmen einer von den verbleibenden ersten Funksendern für die in Betracht gezogene Zelle oder den in Betracht gezogenen Standort innerhalb der Zelle induzierten Interferenzstufe; und

- das Bestimmen eines Leistungswerts für die in Betracht gezogene Zelle oder den in Betracht gezogenen Standort innerhalb der Zelle unter Verwendung der Signaldaten des bedienenden ersten Funksenders und der von den verbleibenden ersten Funksendern induzierten Interferenzstufe.

**8.** Das Verfahren nach einem jeglichen der vorgenannten Ansprüche, wobei Signaldaten und/oder Modelldaten unter Verwendung der Signalstärke und der UE-Standortdaten des Benutzergeräts (User Equipment, UE, 112) in der entsprechenden Zelle bestimmt werden.

**9.** Das Verfahren nach einem jeglichen der vorgenannten Ansprüche, wobei die Abschätzung von Signaldaten nach Bereichen der zweiten Funkzelle ausgeführt wird, in welchen keine Signaldaten für Funksignale messbar sind, die von dem Satz erster Funksender zur Verfügung gestellt werden.

**10.** Das Verfahren nach einem jeglichen der vorgenannten Ansprüche, wobei die ersten und/oder zweiten Funkzellen in Kacheln unterteilt werden, wobei Leistungswerte für die Kacheln bestimmt werden und wobei unter Verwendung der Leistungswerte der Kacheln ein Gesamtleistungswert einer Funkzelle und/oder bestimmter Bereiche der Zelle bestimmt wird.

**11.** Das Verfahren nach einem jeglichen der vorgenannten Ansprüche, wobei auf das Messen von Signaldaten hin auch Empfangsdaten bestimmt werden, welche die Standortabhängige Verteilung von Messungen charakterisieren, und wobei das Bestimmen von Leistungswerten auch die Empfangsdaten benutzt.

**12.** Ein Computer-Programmprodukt, welches computerausführbare Anweisungen umfasst, die dafür ausgelegt sind, um die Verfahrensschritte auszuführen, die in einem jeglichen der vorgenannten Ansprüche definiert werden.

**13.** Drahtloses zellulares Netzsystem (100), eine Vielzahl von Funksendern umfassen, die ein in der Funkzelle befindliches UE mit Funksignalen versorgen, wobei das Netz weiterhin einen Satz erster Funksender eines Satzes erster Funkzellen umfasst, die an eine zweit Funkzelle mit einem entsprechenden zweiten Satz von Funksendern angrenzt, wobei jedem ersten Funksender eine erste Funkzelle zugewiesen ist, wobei das Netzsystem konfiguriert ist für:

- das Bestimmen von Signaldaten, welche die Abdeckung und Kapazität der ersten Funkzellen durch Funksignale kennzeichnen, die von dem ersten und dem zweiten Funksender bereitgestellt werden;

- das Bestimmen von Signaldaten, welche die Abdeckung und Kapazität der zweiten Funkzelle durch Funksignale kennzeichnen, die von dem ersten und dem zweiten Funksender bereitgestellt werden;

- das Bestimmen von Leistungswerten, welche die Abdeckung und Kapazität der ersten Funkzelle und den Originalabdeckungsbereich des zweiten Funksenders unter Verwendung der Signaldaten von Funksignalen kennzeichnen, die von den ersten Funksendern zur Verfügung gestellt werden;

- das Bestimmen von Einstellungen der Signalabgabe des Satzes erster Funksender;

- das Bestimmen eines Satzes modifizierter Einstellungen für Signalabgabe und Signalempfang für den Satz erster Funksender, um die Leistungswerte des Originalabdeckungsbereichs des zweiten Funksenders zu verbessern, dergestalt, dass der Satz modifizierter Einstellungen für Signalabgabe und Signalempfang den Satz erster Funksender in die Lage versetzt, hinsichtlich Abdeckung und Kapazität des Originalabdeckungsbereichs des zweiten Funksenders als Ersatz für den zweiten Funksender zu dienen, während mindestens ein Minimum an Dienstgüte für Funksignale in den ersten Funkzelle aufrechterhalten wird; und

- das Speichern des modifizierten Satzes von Einstellungen für Signalabgabe und Signalempfang als voreingestellte Konfigurationen für den Teilsatz erster Funksender.

14. Das drahtlose zellulare Netzsystem nach Anspruch 13, weiterhin eine Vielzahl von UE umfassend, die sich in der ersten und der zweiten Funkzelle befinden, wobei das Bestimmen der Signaldaten an den UE umfasst:

- das durch das UE erfolgende Bestimmen von Daten, die eine empfange Stärke eines Funksignals kennzeichnen, das von einem ersten oder zweiten Funksender zur Verfügung gestellt wird;
- das durch das UE erfolgende Bestimmen des Standorts des UE innerhalb einer Funkzelle; und
- das Weiterleiten der bestimmten Daten zur empfangenen Signaistärke und zum UE-Standort an die Funksender.

15. Eine Netzwerkverwaltungseinheit (200), lokal verbunden mit einem Satz erster Funksender eines Satzes erster Funkzellen, die einer zweiten Funkzelle mit entsprechenden zweiten Funksendern sowie einem zweiten Funksender benachbart sind, wobei jeder der ersten Funksender einer ersten Funkzelle zugewiesen ist, wobei die Funksender Teil eines drahtlosen zellularen Netzes sind, wobei das Netz weiterhin mindestens eine Netzverwaltungseinheit umfasst, wobei die Netzverwaltungseinheit konfiguriert ist für:

- den Empfang (211) von Signaldaten, welche die Abdeckung und Kapazität der ersten Funkzellen durch Funksignale kennzeichnen, die von dem ersten und dem zweiten Funksender bereitgestellt werden;

- den Empfang von Signaldaten, welche die Abdeckung und Kapazität der zweiten Funkzelle durch Funksignale kennzeichnen, die von dem ersten und dem zweiten Funksender bereitgestellt werden;

- das Bestimmen von Leistungswerten (214), welche die Abdeckung und Kapazität der ersten Funkzelle und den Originalabdeckungsbereich des zweiten Funksenders unter Verwendung der Signaldaten von Funksignalen kennzeichnen, die von den ersten Funksendern zur Verfügung gestellt werden;

- den Empfang von Einstellungen der Signalabgabe des Satzes erster Funksender;

- das Bestimmen eines Satzes modifizierter Einstellungen für Signalabgabe und Signalempfang für den Satz erster Funksender, um die Leistungswerte des Originalabdeckungsbereichs des zweiten Funksenders (215) zu verbessern, dergestalt, dass der Satz modifizierter Einstellungen für Signalabgabe und Signalempfang den Satz erster Funksender in die Lage versetzt, hinsichtlich Abdeckung und Kapazität des Originalabdeckungsbereichs des zweiten Funksenders als Ersatz für den zweiten Funksender zu dienen, während mindestens ein Minimum an Dienstgüte für Funksignale in den ersten Funkzellen aufrechterhalten wird; und

- das Speichern (212) des modifizierten Satzes von Einstellungen für Signalausgabe und Signalempfang als voreingestellte Konfigurierungen für den Teilsatz erster Funksender und/oder das Weiterleiten (213) des modifizierten Satzes von Einstellungen für Signalausgabe und Signalempfang an die entsprechenden Funksender.

## Revendications

1. Procédé destiné à déterminer des configurations préréglées pour un ensemble de premiers émetteurs radio (106) d'un ensemble de premières cellules radio (102) adjacentes à une deuxième cellule radio (104) contenant un deuxième émetteur radio qui lui est propre, dans lequel chaque premier émetteur radio est affecté à une première cellule radio, les configurations préréglées étant conçues pour permettre aux signaux radio émis par le premier ensemble d'émetteurs radio de se substituer aux signaux radio émis par le deuxième émetteur radio à l'intérieur de la zone de couverture initiale du deuxième émetteur radio (108) lorsque le deuxième émetteur radio est hors service, le procédé comprenant les étapes suivantes :

- déterminer les données de signal caractérisant la couverture et la capacité des premières cellules radio par des signaux radio émis par les premiers et le deuxième émetteurs radio ;
- déterminer les données de signal caractérisant la couverture et la capacité de la deuxième cellule radio par des signaux radio émis par les premiers et le deuxième émetteurs radio ;
- déterminer les valeurs de performance caractérisant la couverture et la capacité de la première et de la deuxième cellule radio à l'aide des données de signal des signaux radio émis par les premiers émetteurs radio ;
- déterminer les réglages d'émission et de réception de signal de l'ensemble des premiers émetteurs radio ;
- déterminer un ensemble de réglages d'émission et de réception de signal modifiés pour l'ensemble des premiers émetteurs radio afin d'améliorer les valeurs de performance de la zone de couverture initiale du deuxième émetteur radio, de sorte que l'ensemble des réglages d'émission et de réception de signal modifiés permettent à l'ensemble des premiers émetteurs radio de se substituer au deuxième émetteur radio en ce qui concerne la couverture et la capacité de la zone de couverture initiale du deuxième émetteur radio, tout en maintenant au moins une qualité de service minimale pour les signaux radio à l'intérieur des premières cellules radio ; et
- stocker l'ensemble modifié des réglages d'émission et de réception de signal sous forme de configurations préréglées pour le sous-ensemble des premiers émetteurs radio.

2. Procédé destiné à déterminer des configurations préréglées pour un ensemble de premiers émetteurs radio d'un ensemble de premières cellules radio adjacentes à une deuxième cellule radio contenant un deuxième émetteur radio qui lui est propre, dans lequel chacun des premiers émetteurs radio est affecté à l'une des premières cellules radio, les configurations préréglées étant conçues pour permettre aux signaux radio émis par le premier ensemble d'émetteurs radio de se substituer aux signaux radio émis par le deuxième émetteur radio à l'intérieur de la zone de couverture initiale du deuxième émetteur radio lorsque le deuxième émetteur radio est hors service, dans lequel les émetteurs radio font partie d'un réseau cellulaire sans fil, le réseau comprenant en outre au moins une entité de gestion de réseau, le procédé comprenant les étapes suivantes au niveau d'une entité de gestion de réseau :

- recevoir les données de signal caractérisant la couverture et la capacité des premières cellules radio par des signaux radio émis par les premiers et le deuxième émetteurs radio ;
- recevoir les données de signal caractérisant la couverture et la capacité de la deuxième cellule radio par des signaux radio émis par les premiers et le deuxième émetteurs radio ;
- déterminer les valeurs de performance caractérisant la couverture et la capacité des premières et de la deuxième cellules radio à l'aide des données de signal des signaux radio émis par les premiers émetteurs radio ;
- recevoir les réglages d'émission et de réception de signal de l'ensemble des premiers émetteurs radio ;
- déterminer un ensemble de réglages d'émission et de réception de signal modifiés pour l'ensemble des premiers émetteurs radio afin d'améliorer les valeurs de performance de la zone de couverture initiale du deuxième émetteur radio, de sorte que l'ensemble des réglages d'émission et de réception de signal modifiés permettent à l'ensemble des premiers émetteurs radio de se substituer au deuxième émetteur radio en ce qui concerne la couverture et la capacité de la zone de couverture initiale du deuxième émetteur radio, tout en maintenant au moins une qualité de service minimale pour les signaux radio à l'intérieur des premières cellules radio ;
- stocker l'ensemble modifié des réglages d'émission et de réception de signal sous forme de configurations préréglées pour le sous-ensemble des premiers émetteurs radio et/ou transmettre l'ensemble modifié des réglages d'émission et de réception de signal aux émetteurs radio correspondants.

3. Procédé selon l'une quelconque des revendications précédentes, dans lequel la détermination de l'ensemble de réglages d'émission et de réception de signal modifiés est réalisée par une optimisation numérique.

4. Procédé selon la revendication 3, dans lequel la détermination de l'ensemble de réglages d'émission et de réception de signal modifiés pour l'ensemble des premiers émetteurs radio comprend les étapes suivantes :

a. déterminer un ensemble différent de réglages d'émission et de réception de signal pour les premiers émetteurs radio ;

b. déterminer des valeurs de performance pour les premières cellules radio et la zone de couverture initiale du deuxième émetteur radio pour l'ensemble différent de réglages d'émission et de réception de signal des premiers émetteurs radio en supposant que le deuxième émetteur radio est hors service ;

c. déterminer si les valeurs de performance pour l'ensemble différent de réglages d'émission et de réception de signal sont égales ou supérieures à un minimum prédéfini pour les valeurs de performance ;

d. si les valeurs de performance pour l'ensemble différent de réglages d'émission et de réception de signal sont égales ou supérieures à un minimum prédéfini pour les valeurs de performance, stocker et/ou transmettre l'ensemble modifié de réglages d'émission et de réception de signal sous forme de configurations préréglées pour le sous-ensemble des premiers émetteurs radio ; et

e. si les valeurs de performance pour l'ensemble différent de réglages d'émission et de réception de signal sont inférieures à un minimum prédéfini pour les valeurs de performance, revenir à l'étape a du procédé.

5. Procédé selon l'une quelconque des revendications précédentes, dans lequel un modèle de propagation de signal à l'intérieur de la deuxième cellule radio est déterminé, à l'aide de données de modèle caractérisant la couverture et la capacité en fonction de la position pour une puissance d'émission et un réglage d'émission et de réception de signal prédéfinis du deuxième émetteur radio, et dans lequel les données de signal pour la zone de couverture initiale du deuxième émetteur radio sont estimées à l'aide du modèle de propagation de signal dérivé et des réglages d'émission de signal de l'ensemble des premiers émetteurs radio.

6. Procédé selon l'une quelconque des revendications précédentes, dans lequel la détermination du modèle de propagation de signal à l'intérieur de la zone de couverture initiale du deuxième émetteur radio comprend les étapes suivantes :

- déterminer les données de modèle caractérisant une intensité de réception de signal ou une répartition d'intensité de signal au niveau d'une position prédéfinie à l'intérieur de la deuxième cellule radio pour une puissance d'émission prédéfinie et des réglages d'émission de signal prédéfinis du deuxième émetteur radio ;

- déterminer l'intensité d'un signal radio émis vers la position prédéfinie par le deuxième émetteur radio à l'aide de la puissance d'émission et des réglages d'émission de signal du deuxième émetteur radio ;

- déterminer un affaiblissement de propagation de la puissance du signal radio du à la propagation depuis l'émetteur radio vers la position prédéfinie ;

- déterminer un modèle de propagation de signal qui correspond le mieux à l'affaiblissement de propagation déterminé ; et

- affecter à la position le modèle déterminé précédemment.

7. Procédé selon l'une quelconque des revendications précédentes, dans lequel la détermination de la valeur de performance pour une cellule radio ou une position à l'intérieur d'une cellule radio comprend les étapes suivantes :

- déterminer un premier émetteur radio de desserte qui fournit le plus haut niveau de couverture et de capacité pour la cellule ou la position à l'intérieur de la cellule considérée ;

- déterminer un niveau d'interférence induite par les premiers émetteurs radio restants pour la cellule ou la position à l'intérieur de la cellule considérée ; et

- déterminer une valeur de performance pour la cellule ou la position à l'intérieur de la cellule considérée à l'aide des données de signal du premier émetteur radio de desserte et du niveau d'interférence induite par les premiers émetteurs radio restants.

8. Procédé selon l'une quelconque des revendications précédentes, dans lequel les données de signal et/ou les données de modèle sont déterminées à l'aide de l'intensité du signal et des données de position d'équipement utilisateur (UE) de l'équipement utilisateur (112) à l'intérieur de la cellule correspondante.

9. Procédé selon l'une quelconque des revendications précédentes, dans lequel l'estimation des données de signal est réalisée pour les zones de la deuxième cellule radio dans lesquelles les données de signal pour les signaux radio émis par l'ensemble des premiers émetteurs radio ne sont pas mesurables.

10. Procédé selon l'une quelconque des revendications précédentes, dans lequel la deuxième et/ou les premières cellules radio sont subdivisées en carrés, dans lequel les valeurs de performance sont déterminées pour les carrés, et dans lequel à l'aide des valeurs de performance pour les carrés une valeur de performance globale pour la cellule radio et/ou pour des parties spécifiques de la cellule radio est déterminée.

**11.** Procédé selon l'une quelconque des revendications précédentes, dans lequel lors de la mesure des données de signal sont déterminées également des données de réception caractérisant la répartition des mesures en fonction de la position et dans lequel la détermination des valeurs de performance utilise aussi les données de réception.

**12.** Produit-programme informatique comprenant des instructions exécutables par un ordinateur adapté pour réaliser les étapes de procédé définies selon l'une quelconque des revendications précédentes.

**13.** Système de réseau cellulaire sans fil (100) comprenant une pluralité d'émetteurs radio diffusant des signaux radio à un équipement utilisateur (UE) situé à l'intérieur de cellules radio, le réseau comprenant en outre un ensemble de premiers émetteurs radio d'un ensemble de premières cellules radio adjacentes à une deuxième cellule radio contenant un deuxième émetteur radio qui lui est propre, dans lequel chacun des premiers émetteurs radio est affecté à l'une des premières cellules radio, le système de réseau étant configuré pour :

- déterminer les données de signal caractérisant la couverture et la capacité des premières cellules radio par des signaux radio émis par les premiers et le deuxième émetteurs radio ;
- déterminer les données de signal caractérisant la couverture et la capacité de la deuxième cellule radio par des signaux radio émis par les premiers et le deuxième émetteurs radio ;
- déterminer les valeurs de performance caractérisant la couverture et la capacité des premières cellules radio et la zone de couverture initiale du deuxième émetteur radio à l'aide des données de signal des signaux radio émis par les premiers émetteurs radio ;
- déterminer les réglages d'émission et de réception de signal de l'ensemble des premiers émetteurs radio ;
- déterminer un ensemble de réglages d'émission et de réception de signal modifiés pour l'ensemble des premiers émetteurs radio afin d'améliorer les valeurs de performance de la zone de couverture initiale du deuxième émetteur radio, de sorte que l'ensemble des réglages d'émission et de réception de signal modifiés permettent à l'ensemble des premiers émetteurs radio de se substituer au deuxième émetteur radio en ce qui concerne la couverture et la capacité de la zone de couverture initiale du deuxième émetteur radio, tout en maintenant au moins une qualité de service minimale pour les signaux radio à l'intérieur des premières cellules radio ; et
- stocker l'ensemble modifié des réglages d'émission et de réception de signal sous forme de configurations préréglées pour le sous-ensemble des premiers émetteurs radio.

**14.** Système de réseau cellulaire sans fil selon la revendication 13, comprenant en outre une pluralité d'équipements utilisateur (UE), situés à l'intérieur des premières et de la deuxième cellules radio, dans lequel la détermination des données de signal au niveau de l'UE comprend les étapes suivantes :

- déterminer par l'UE les données caractérisant l'intensité de réception d'un signal radio émis par un premier ou un deuxième émetteur radio ;
- déterminer par l'UE la position de l'UE à l'intérieur d'une cellule radio ; et
- transmettre les données déterminées sur l'intensité de réception du signal et la position de l'UE aux émetteurs radio.

**15.** Entité de gestion de réseau (200) reliée logiquement à un ensemble de premiers émetteurs radio d'un ensemble de premières cellules radio adjacentes à une deuxième cellule radio contenant un deuxième émetteur radio qui lui est propre, et au deuxième émetteur radio, dans laquelle chacun des premiers émetteurs radio est affecté à l'une des premières cellules radio, dans laquelle les émetteurs radio font partie d'un réseau cellulaire sans fil, le réseau comprenant en outre au moins une entité de gestion de réseau, l'entité de gestion de réseau étant configurée pour :

- recevoir (211) des données de signal caractérisant la couverture et la capacité des premières cellules radio par des signaux radio émis par les premiers et le deuxième émetteurs radio ;
- recevoir des données de signal caractérisant la couverture et la capacité de la deuxième cellule radio par des signaux radio émis par les premiers et le deuxième émetteurs radio ;
- déterminer les valeurs de performance (214) caractérisant la couverture et la capacité des premières cellules radio et la zone de couverture initiale du deuxième émetteur radio à l'aide des données de signal des signaux radio émis par les premiers émetteurs radio ;
- recevoir les réglages d'émission de signal de l'ensemble des premiers émetteurs radio ;
- déterminer un ensemble de réglages d'émission et de réception de signal modifiés pour l'ensemble des premiers émetteurs radio afin d'améliorer les valeurs de performance de la zone de couverture initiale du deuxième émetteur radio (215), de sorte que l'ensemble des réglages d'émission et de réception de signal modifiés permettent à l'ensemble des premiers émetteurs radio de se substituer au deuxième émet-

**EP 2 753 113 B1**

teur radio en ce qui concerne la couverture et la capacité de la zone de couverture initiale du deuxième émetteur radio, tout en maintenant au moins une qualité de service minimale pour les signaux radio à l'intérieur des premières cellules radio ; et

- stocker (212) l'ensemble modifié des réglages d'émission et de réception de signal sous forme de configurations préréglées pour le sous-ensemble des premiers émetteurs radio et/ou transmettre (213) l'ensemble modifié des réglages d'émission et de réception de signal aux émetteurs radio correspondants.

FIG 1

FIG 2

FIG 3

FIG 4

FIG 5

602

Determine signal-data for first radio cells

604

Determine signal-data for second radio cell

606

Determine performance values for first and second radio cells

608

Determine signal emission and reception settings of the first radio transmitters

610

Determine signal emission and reception settings that enhance the performance values of first and second radio cells

# FIG 6

EP 2 753 113 B1

FIG 7

**200**

**210**

**220**

CPU

| 211 | receive data |
| 212 | store data |
| 213 | forward data |
| 214 | determine performance values |
| 215 | optimize signal emission and reception settings |

storage medium

| signal-data of 1st cells | 221 |
| signal-data of 2nd cell | 222 |
| performance values | 223 |
| signal emission and reception settings | 224 |
| modified signal emission and reception settings | 225 |

communications-interface

230

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M AMIRIJOO.** Cell Outage Management in LTE Networks. *ISWCS 2009,* 30 September 2009

- **KEITH T. HERRING et al.** Path-Loss Characteristics of Urban Wireless Channels. *IEEE Transactions On Antennas And Propagation,* January 2010, vol. 58 (1), 171-176